# FASCICULE DE BREVET EUROPEEN

(11) **EP 1 579 132 B1**
(45) Date de publication et mention de la délivrance du brevet: **18.04.2007**
(21) Numéro de dépôt: 03799698.0
(22) Date de dépôt: 23.12.2003
(51) Int. Cl.: F16K 11/085, F16K 5/18, B60H 1/00

(54) **VANNE DE COMMANDE A ETANCHEITE AMELIOREE POUR CIRCUIT DE CIRCULATION DE FLUIDE**
STEUERVENTIL MIT VERBESSERTER DICHTIGKEIT FÜR EINEN FLÜSSIGKEITSSTRÖMUNGSKREIS
CONTROL VALVE WITH IMPROVED SEALING FOR A FLUID CIRCULATION SYSTEM

(30) Priorité: 30.12.2002 FR 0216856
(43) Date de publication de la demande: 28.09.2005
(73) Titulaire: VALEO THERMIQUE MOTEUR, 78321 La Verriere (FR)
(72) Inventeur: VACCA, Frédéric, F-78910 Behoust (FR); CHANFREAU, Mathieu, F-78650 Saulx Marchais (FR)
(74) Mandataire: Rolland, Jean-Christophe
(86) Numéro de dépôt international: PCT/FR2003/003881
(87) Numéro de publication internationale: WO 2004/061342

(56) Documents cités:
- WO-A-01/14773
- FR-A- 2 827 360
- GB-A- 934 531
- GB-A- 1 507 255
- US-A- 2 045 113
- US-A- 3 301 522
- US-A- 4 132 388
- US-A- 4 948 095
- US-A- 6 164 248

## Description

L'invention concerne une vanne de commande destinée à un circuit de circulation de fluide, notamment à un circuit de refroidissement d'un moteur thermique de véhicule automobile.

La vanne de l'invention est du type comprenant un corps qui est muni d'une entrée de fluide et d'au moins deux sorties de fluide et qui délimite un logement de révolution pour un organe de réglage propre à tourner autour d'un axe de rotation et à prendre différentes positions angulaires pour contrôler la distribution du fluide au travers des sorties, le corps comprenant une paroi de fond dans laquelle débouche l'entrée de fluide et une paroi latérale dans laquelle débouchent les sorties de fluide.

Une telle vanne peut être qualifiée de "vanne rotative", dans la mesure où son organe de réglage tourne autour d'un axe de rotation. Dans une vanne de ce type, la paroi latérale délimite le plus souvent un logement cylindrique propre à recevoir l'organe de réglage qui présente une forme cylindrique homologue.

Le fluide qui pénètre dans le corps de vanne par l'entrée de fluide est distribué entre les sorties de fluide, en fonction de la position angulaire de l'organe de réglage.

Dans une vanne de commande de ce type, il est nécessaire d'assurer une étanchéité entre l'organe de réglage et la paroi latérale du corps de vanne. Cette étanchéité vise à empêcher toute fuite accidentelle de fluide vers une sortie, lorsque cette sortie doit être obturée par l'organe de réglage.

Différentes solutions ont déjà été proposées pour assurer une telle étanchéité, voir, par exemple, les documents WO 03/006858, US 6,164,248 ou WO 01/14773.

Cette étanchéité peut être assurée directement par contact entre les matériaux respectifs du corps de vanne et de l'organe de réglage.

L'étanchéité peut aussi faire appel à un joint d'étanchéité intermédiaire, par exemple en forme de chemise, qui est interposé entre l'organe de réglage et la paroi latérale du corps de vanne.

Dans toutes ces solutions connues, le contact entre l'organe de réglage et la paroi latérale du corps de vanne tend à générer des frottements qui doivent être vaincus lors de la commande en rotation de l'organe de réglage.

Ceci nécessite par conséquent un effort important, soit manuellement, soit par l'intermédiaire d'un actionneur, lors de cette commande en rotation.

L'invention a notamment pour but de surmonter les inconvénients précités.

Elle vise en particulier à procurer une vanne de commande du type ci-dessus dans laquelle les frottements entre l'organe de réglage et le corps de vanne sont diminués, tout en garantissant une étanchéité accrue entre eux.

Conformément à l'invention, l'organe de réglage est entouré d'un segment d'étanchéité en forme d'anneau ouvert qui est solidaire en rotation de l'organe de réglage et qui est agencé avec un faible jeu autour de l'organe de réglage, ce qui permet au segment d'étanchéité d'être plaqué intérieurement contre la paroi latérale en vue d'assurer une étanchéité sous l'action de la pression du fluide.

Ainsi, l'étanchéité est assurée par la pression du fluide qui vient s'immiscer entre l'organe de réglage proprement dit et le segment d'étanchéité, du fait du jeu qui existe entre eux.

Cette solution nécessite qu'un espace annulaire, même partiel, existe entre l'organe de réglage et le segment d'étanchéité pour permettre au fluide d'y accéder et d'exercer sa pression contre le segment d'étanchéité.

En outre, cette solution offre l'avantage de compenser l'usure du segment d'étanchéité.

Le jeu entre l'organe de réglage et le segment d'étanchéité est, par exemple, de 1/10 à 1 mm, notamment d'environ 3/10 de millimètre.

Dans l'invention, le segment d'étanchéité est réalisé dans une matière à faible coefficient de frottement. Il peut s'agir en particulier d'une matière du type polyamide ou encore du type polytétrafluoréthylène (PTFE).

Selon une autre caractéristique de l'invention, le segment d'étanchéité comporte une surface extérieure lisse dans laquelle débouche une multiplicité de trous borgnes, régulièrement répartis, ce qui permet de diminuer la surface de contact entre le segment d'étanchéité et la paroi latérale.

Cette diminution de la surface de contact contribue à réduire le frottement sans compromettre l'étanchéité.

Avantageusement, le rapport entre la surface des trous borgnes et la surface lisse du segment d'étanchéité est compris entre 25 % et 40 %. Ce rapport est de préférence voisin de 33 %.

Les trous borgnes, qui constituent des trous non traversants, ont avantageusement un contour circulaire. En particulier, ils peuvent avoir chacun la forme d'une calotte sphérique.

Selon encore une autre caractéristique de l'invention, l'organe de réglage et le segment d'étanchéité comportent des reliefs de forme conjuguée pour permettre leur solidarisation en rotation.

Dans une forme de réalisation préférée de l'invention, la paroi latérale du corps de vanne délimite un logement cylindrique et le segment d'étanchéité présente une surface extérieure cylindrique.

Dans une forme de réalisation, l'entrée de fluide débouche axialement dans la paroi de fond, tandis que les sorties de fluide débouchent radialement dans la paroi latérale du corps de vanne.

Sous un autre aspect, l'invention concerne un circuit de circulation de fluide comprenant une vanne de commande telle que définie précédemment, dont l'entrée de fluide est reliée à une source de fluide et dont les sorties de fluide sont reliées respectivement à des branches du circuit.

Un tel circuit est avantageusement réalisé sous la forme d'un circuit de refroidissement d'un moteur thermique de véhicule automobile, qui est parcouru par un fluide de refroidissement sous l'action d'une pompe de circulation.

La vanne de commande constitue alors avantageusement une vanne à trois voies, dont l'entrée de fluide est reliée à une arrivée de fluide de refroidissement en provenance du moteur, et dont les trois sorties de fluide sont reliées respectivement à une première branche du circuit qui contient un radiateur de refroidissement, à une deuxième branche du circuit qui constitue une dérivation du radiateur de refroidissement, et à une troisième branche du circuit qui contient un aérotherme pour le chauffage de l'habitacle.

Dans la description qui suit, faite seulement à titre d'exemple, on se réfère aux dessins annexés, sur lesquels :
- la figure 1 est une vue en perspective d'une vanne de commande, du type à trois voies, selon une forme de réalisation de l'invention ;
- la figure 2 est une vue en coupe de la vanne de commande de la figure 1, le plan de coupe passant par l'axe de rotation de l'organe de réglage ;
- la figure 3 est une vue en coupe correspondante de l'organe de réglage et du segment d'étanchéité dont il est muni ;
- la figure 4 est une vue schématique en coupe de la vanne de commande des figures 1 et 2, le plan de coupe étant perpendiculaire à l'axe de rotation de l'organe de réglage ;
- la figure 5 est une vue en perspective du segment d'étanchéité ;
- la figure 6 est une vue en coupe transversale du segment d'étanchéité de la figure 5 ;
- la figure 7 est un détail à échelle agrandie de la figure 6 ;
- la figure 8 représente la surface développée du segment d'étanchéité, sans trous borgnes ;
- la figure 9 est une vue analogue à la figure 8 avec les trous borgnes ; et
- la figure 10 représente un circuit de refroidissement d'un moteur thermique de véhicule automobile, équipé d'une vanne de commande selon l'invention.

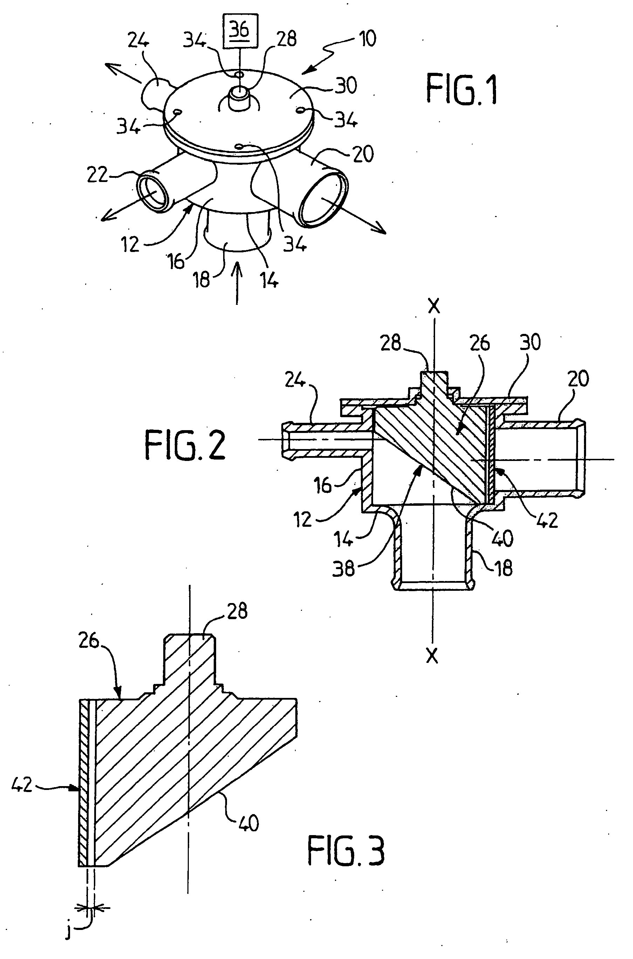

Les figures 1 et 2 montrent une vanne de commande 10 qui comprend un corps cylindrique 12 limité par une paroi de fond 14 et une paroi latérale cylindrique 16 d'axe XX. Dans la paroi de fond 14 débouche axialement une tubulure 18 d'entrée de fluide. Dans la paroi latérale cylindrique 16 débouchent trois tubulures de sortie de fluide 20, 22 et 24. Dans l'exemple, les tubulures de sorties 20, 22 et 24 débouchent radialement dans la paroi 16. Les tubulures 20 et 24 sont diamétralement opposées, tandis que la tubulure 22 forme un angle de 90° par rapport à l'axe commun des tubulures 20 et 24. En outre, les tubulures 20, 22 et 24 ont des diamètres successivement décroissants.

A l'intérieur du corps de vanne 12 est logé un organe de réglage 26, encore appelé organe tournant, qui est réalisé sous la forme d'un élément généralement cylindrique et qui se prolonge par une tige 28 dirigée suivant l'axe XX. Cette tige 28 passe au travers d'une ouverture centrale que comporte un couvercle 30 de forme circulaire. Ce couvercle est vissé sur une collerette 32 du corps de vanne par l'intermédiaire de quatre vis de fixation 34, avec interposition d'un joint d'étanchéité (non représenté). L'organe de réglage 26 est entraîné en rotation autour de l'axe XX par des moyens de motorisation 36 représentés schématiquement sur la figure 1. Il peut s'agir, par exemple, d'un moteur du type pas à pas susceptible d'amener l'organe de réglage 26 dans une multiplicité de positions différentes, soit par incréments successifs, soit de manière continue.

L'organe de réglage 26 comprend une extrémité tronquée 38 constituée, dans l'exemple, par une face plane 40 formant un angle voisin de 45° avec l'axe de rotation XX. Ainsi, l'organe de réglage 26 permet de contrôler les sorties de fluide 20, 22 et 24 avec une loi définie en fonction de sa position angulaire dans le corps de vanne.

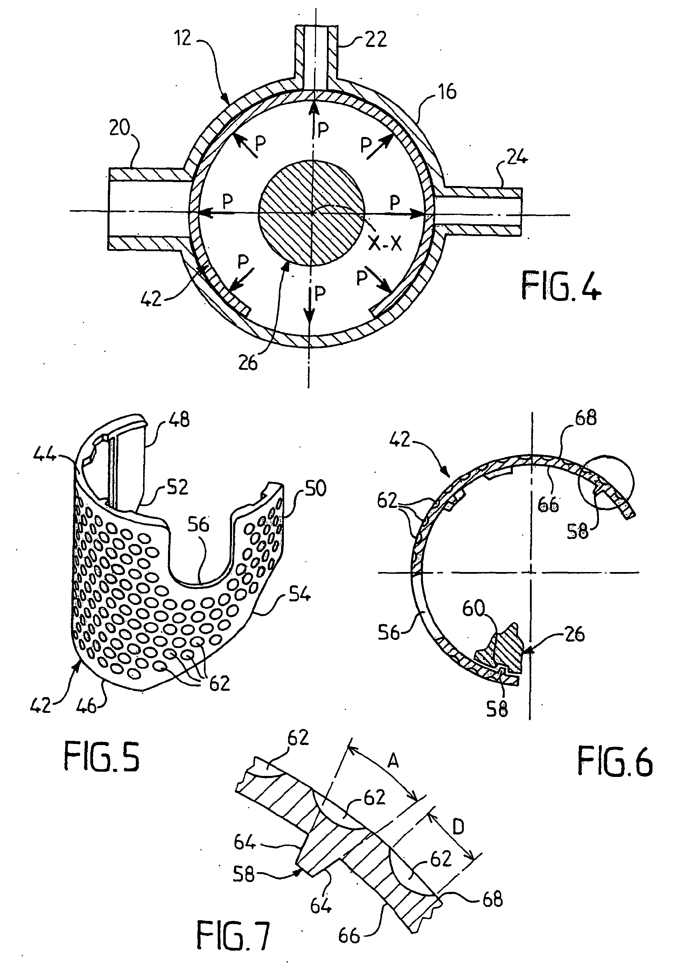

Conformément à l'invention, l'organe de réglage 26 est entouré, sur une partie de sa périphérie, d'un segment d'étanchéité 42 en forme d'anneau ouvert, solidaire en rotation de l'organe de réglage, et propre à venir en contact étanche avec la face interne de la paroi latérale 16. Ce segment d'étanchéité, dont la forme apparaît mieux sur les figures 5 à 7, est disposé avec un faible jeu j (figure 3) autour de l'organe de réglage. Ceci permet au fluide pénétrant à l'intérieur du corps de vanne par la tubulure d'entrée 18 d'exercer une pression dirigée radialement vers l'extérieur agissant contre l'intérieur du segment d'étanchéité 42 pour le plaquer radialement contre la paroi latérale 16 en vue d'assurer une étanchéité. Cette pression est montrée par les flèches radiales P sur la figure 4. Cette figure 4 constitue un dessin schématique et, en particulier, l'organe de réglage 26 est représenté schématiquement, le jeu existant avec le segment d'étanchéité étant volontairement très exagéré.

Comme on le voit plus particulièrement sur les figures 5 et 6, le segment d'étanchéité 42, en forme d'anneau ouvert, présente une surface généralement cylindrique qui épouse la forme tronquée de l'enveloppe de l'organe de réglage 26. Le segment 42 est limité en partie supérieure par un bord 44 en arc de cercle, en partie inférieure par un bord 46 également en arc de cercle, par deux bords 48 et 50 généralement parallèles à l'axe et par des bords inclinés 52 et 54. Une découpe 56 formée à partir du bord 44 est en outre prévue. Sur sa face intérieure, le segment 42 comporte des nervures 58, parallèles à l'axe, destinées chacune à coopérer avec une rainure 60 également parallèle à l'axe, formée à la périphérie de l'organe de réglage (figure 6). Ceci permet au segment d'étanchéité d'être solidaire en rotation de l'organe de réglage et au fluide de pénétrer dans l'espace intercalaire compris entre l'organe de réglage et le segment d'étanchéité.

Le segment d'étanchéité est réalisé dans une matière à faible coefficient de frottement, par exemple, du polythétrafluoréthylène (PTFE) ou encore un polyamide, etc. Pour diminuer encore le frottement entre le segment d'étanchéité et la face interne de la paroi latérale 16, ce segment d'étanchéité comporte une surface extérieure lisse dans laquelle débouchent une multiplicité de trous borgnes 62 régulièrement répartis. Ces trous borgnes apparaissent mieux sur les figures 5 à 7. Comme on peut le voir sur les figures, chacun des trous borgnes, c'est à dire non traversants, a un contour circulaire. Dans l'exemple, chacun des trous borgnes a la forme d'une calotte sphérique (voir la figure 7).

Dans l'exemple de réalisation représentée, la nervure 58, que l'on voit aussi sur le détail de la figure 7, est limitée par deux parois radiales 64 qui forment entre elles un angle A qui est ici de 30°. Les parois radiales 64 se rattachent à une face intérieure 66 du segment d'étanchéité, à l'opposé d'une face extérieure 68 dans laquelle sont formés les trous borgnes 62 (figures 6 et 7).

Les trous borgnes ont ici chacun un diamètre (D) convenablement choisi en fonction du pas axial et du pas radial entre les trous borgnes.

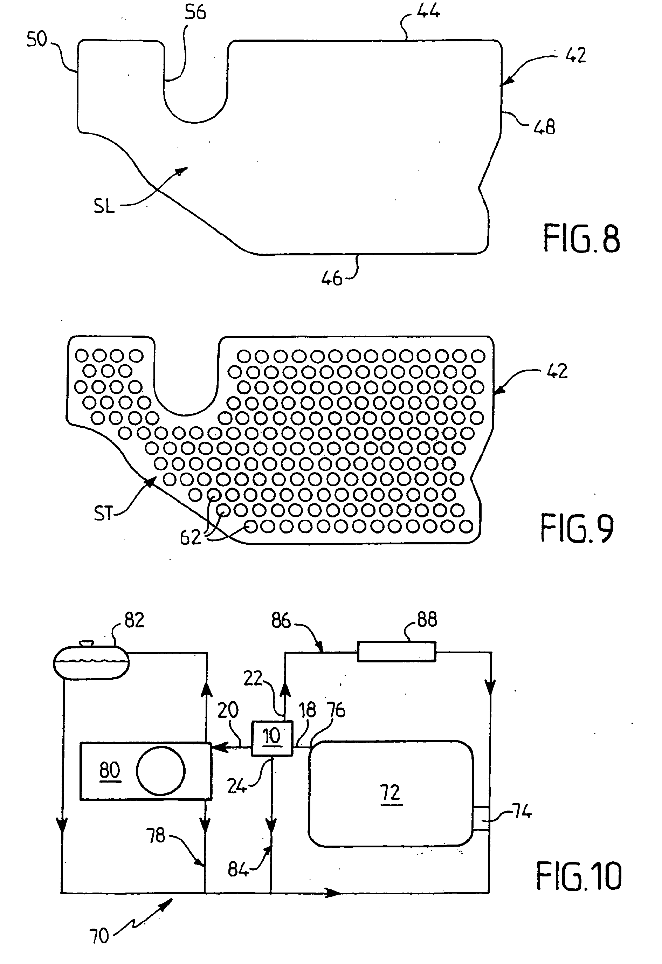

On a représenté sur la figure 8 la surface lisse SL du segment d'étanchéité, sans les trous borgnes 62.

Sur la figure 9 on a représenté la même surface avec les trous borgnes 62. La surface totale des trous borgnes est appelée ici ST.

On peut définir un rapport R entre la surface des trous borgnes et la surface lisse SL, c'est à dire ici R = ST/SL, qui permet de caractériser le pourcentage de la surface lisse occupée par les trous borgnes en question. De manière générale, il est avantageux que ce rapport R soit compris entre 25 % et 40 %, de préférence voisin de 33 %.

Dans un exemple de réalisation, la surface lisse SL est de 4473 m2. Les trous borgnes 62 ont chacun un diamètre de 3 mm et sont séparés mutuellement par un pas axial de 4 mm et un pas radial de 4,45 mm. Il en résulte que la surface ST est ici de 1428 m2, ce qui donne un rapport R sensiblement égal à 1/3 ou 33 %.

Il en résulte que, dans ces conditions, le couple de frottement entre le segment d'étanchéité et le corps de vanne est réduit d'environ 1/3 par rapport au couple de frottement résultant d'un segment d'étanchéité ayant une surface lisse.

Dans ces conditions, il est possible, toute chose égale par ailleurs, d'utiliser des moyens de motorisation 36 de plus faible puissance, et cela sans compromettre les caractéristiques d'étanchéité.

La vanne de l'invention trouve une application particulière dans le domaine des véhicules automobiles. La figure 10 montre un circuit 70 pour le refroidissement d'un moteur thermique 72 de véhicule automobile. Le circuit 70 est parcouru par un fluide de refroidissement, habituellement de l'eau additionnée d'un anti-gel, qui circule sous l'action d'une pompe 74. Le fluide échauffé par le moteur, quitte ce dernier par une sortie 76 qui est reliée à la tubulure d'entrée 18 d'une vanne de commande 10 du type décrit précédemment. Cette vanne comprend trois tubulures de sortie 20, 22 et 24 qui sont reliées à trois branches du circuit.

Ce circuit comprend une première branche 78 qui contient un radiateur de refroidissement 80 et un vase d'expansion 82, une deuxième branche 84 qui forme une dérivation du radiateur de refroidissement 80 et du vase d'expansion 82, ainsi qu'une troisième branche 86 qui contient un aérotherme 88 servant au chauffage de l'habitacle du véhicule.

La tubulure 20 est reliée à la branche 78 (radiateur), la tubulure 22 est reliée à la branche 86 (aérotherme) et la tubulure 24 à la branche 84 (dérivation). La vanne permet ainsi de gérer indépendamment les débits de fluide dans les trois branches précitées du circuit, afin d'optimiser la température du moteur thermique et le chauffage de l'habitacle.

Bien entendu, l'invention n'est pas limitée à la forme de réalisation telle que décrite précédemment et s'applique à d'autres variantes. Ainsi, la forme de révolution définie par le corps de vanne n'est pas nécessairement cylindrique et pourrait, par exemple, être conique ou tronconique. Le nombre et la disposition mutuelle des tubulures de sortie est susceptible aussi de nombreuses variantes en fonction des applications considérées.

De manière générale, la vanne de l'invention trouve une application particulière au domaine de l'industrie automobile.

## Revendications

1. Vanne de commande pour un circuit de circulation de fluide, comprenant un corps (12) qui est muni d'une entrée de fluide (18) et d'au moins deux sorties de fluide (20, 22, 24) et qui délimite un logement de révolution pour un organe de réglage (26) propre à tourner autour d'un axe de rotation (XX) et à prendre différentes positions angulaires pour contrôler la distribution du fluide au travers des sorties, le corps (12) comprenant une paroi de fond (14) dans laquelle débouche l'entrée de fluide et une paroi latérale (16) dans laquelle débouchent les sorties de fluide,
**caractérisée en ce que** l'organe de réglage (26) est entouré d'un segment d'étanchéité (42) en forme d'anneau ouvert, qui est solidaire en rotation de l'organe de réglage (26) et qui est agencé avec un faible jeu (j) autour de l'organe de réglage, ce qui permet au segment d'étanchéité d'être plaqué intérieurement contre la paroi latérale (16) en vue d'assurer une étanchéité sous l'action de la pression (P) du fluide.

2. Vanne de commande selon la revendication 1, **caractérisée en ce que** le segment d'étanchéité (42) est réalisé dans une matière à faible coefficient de frottement.

3. Vanne de commande selon la revendication 2, **caractérisée en ce que** la matière à faible coefficient de frottement est choisie parmi les polyamides et le polytétrafluoréthylène.

4. Vanne de commande selon l'une des revendications 1 à 3, **caractérisée en ce que** le segment d'étanchéité (42) comporte une surface extérieure lisse dans laquelle débouchent une multiplicité de trous borgnes (62), régulièrement répartis, ce qui permet de diminuer la surface de contact entre le segment d'étanchéité (42) et la paroi latérale (16).

5. Vanne de commande selon la revendication 4, **caractérisée en ce que** le rapport (R) entre la surface (ST) des trous borgnes (62) et la surface lisse (SL) du segment d'étanchéité (42) est compris entre 25 % et 40 %, de préférence voisin de 33 %.

6. Vanne de commande selon l'une des revendications 4 et 5, **caractérisée en ce que** les trous borgnes (62) ont un contour circulaire.

7. Vanne de commande selon la revendication 6, **caractérisée en ce que** les trous borgnes (62) ont la forme de calottes sphériques.

8. Vanne de commande selon l'une des revendications 1 à 7, **caractérisée en ce que** l'organe de réglage (26) et le segment d'étanchéité (42) comportent des reliefs (58, 60) de forme conjuguée pour permettre leur solidarisation en rotation.

9. Vanne de commande selon l'une des revendications 1 à 8, **caractérisée en ce que** la paroi latérale (16) du corps de vanne délimite un logement cylindrique et **en ce que** le segment d'étanchéité (42) présente une surface extérieure cylindrique.

10. Vanne de commande selon l'une des revendications 1 à 8, **caractérisée en ce que** l'entrée de fluide (18) débouche axialement dans la paroi de fond (14), et **en ce que** les sorties de fluide (20, 22, 24) débouchent radialement dans la paroi latérale (16) du corps de vanne.

11. Circuit de circulation de fluide, **caractérisé en ce qu'**il comprend une vanne de commande selon l'une des revendications 1 à 10, dont l'entrée de fluide (18) est reliée à une source de fluide (76) et dont les sorties de fluide (20, 22, 24) sont reliées respectivement à des branches (78, 86, 84) du circuit.

12. Circuit de circulation de fluide selon la revendication 11, **caractérisé en ce qu'**il est réalisé sous la forme d'un circuit de refroidissement (70) d'un moteur thermique (72) de véhicule automobile, qui est parcouru par un fluide de refroidissement sous l'action d'une pompe de circulation (74), et **en ce que** la vanne de commande (10) est une vanne à trois voies dont l'entrée de fluide (18) est reliée à une arrivée (76) de fluide de refroidissement en provenance du moteur (72) et dont les trois sorties de fluide (20, 22, 24) sont reliées respectivement à une première branche (78) du circuit qui contient un radiateur de refroidissement (80), à une deuxième branche (84) du circuit qui constitue une dérivation du radiateur de refroidissement (80), et à une troisième branche (86) du circuit qui contient un aérotherme (88) pour le chauffage de l'habitacle.

## Claims

1. Control valve for a fluid circulation circuit, comprising a body (12) which is equipped with a fluid inlet (18) and with at least two fluid outlets (20, 22, 24) and which delimits a housing of revolution for an adjusting element (26) able to rotate about an axis of rotation (XX) and to adopt various angular positions to control the distribution of fluid through the outlets, the body (12) comprising an end wall (14) into which the fluid inlet opens and a side wall (16) into which the fluid outlets open,
**characterized in that** the adjusting member (26) is surrounded by a sealing ring (42) in the form of an open annulus, which rotates as one with the adjusting member (26) and is arranged with a small clearance (j) around the adjusting member, this allowing the sealing ring to be pressed firmly internally against the side wall (16) with a view to ensuring sealing under the action of the pressure (P) of the fluid.

2. Control valve according to Claim 1, **characterized in that** the sealing ring (42) is made of a material with a low coefficient of friction.

3. Control valve according to Claim 2, **characterized in that** the material with a low coefficient of friction is chosen from polyamides and polytetrafluoroethylene.

4. Control valve according to one of Claims 1 to 3, **characterized in that** the sealing ring (42) comprises a smooth exterior surface into which a multitude of uniformly spaced blind holes (62) open, this making it possible to reduce the area of contact between the sealing ring (42) and the side wall (16).

5. Control valve according to Claim 4, **characterized in that** the ratio (R) between the surface area (ST) of the blind holes (62) and the smooth surface area (SL) of the sealing ring (42) is between 25% and 40%, preferably close to 33%.

6. Control valve according to one of Claims 4 and 5, **characterized in that** the blind holes (62) have a circular contour.

7. Control valve according to Claim 6, **characterized in that** the blind holes (62) have the form of caps of a sphere.

8. Control valve according to one of Claims 1 to 7, **characterized in that** the adjusting member (26) and the sealing ring (42) have reliefs (58, 60) of mating shapes to allow them to be made to rotate as one.

9. Control valve according to one of Claims 1 to 8, **characterized in that** the side wall (16) of the valve body delimits a cylindrical housing and **in that** the sealing ring (42) has a cylindrical exterior surface.

10. The control valve according to one of Claims 1 to 8, **characterized in that** the fluid inlet (18) opens axially into the end wall (14), and **in that** the fluid outlets (20, 22, 24) open radially into the side wall (16) of the valve body.

11. Fluid circulation circuit, **characterized in that** it comprises a control valve according to one of Claims 1 to 10, the fluid inlet (18) of which is connected to a fluid source (76) and the fluid outlets (20, 22, 24) of which are connected respectively to branches (78, 86, 84) of the circuit.

12. Fluid circulation circuit according to Claim 11, **characterized in that** it is produced in the form of a cooling circuit (70) for the combustion engine (72) of a motor vehicle, through which a cooling fluid passes under the action of a circulation pump (74), and **in that** the control valve (10) is a three-way valve, the fluid inlet (18) of which is connected to an intake (76) for cooling fluid arriving from the engine (72) and the three fluid outlets (20, 22, 24) of which are connected respectively to a first branch (78) of the circuit which contains a cooling radiator (80), to a second branch (84) of the circuit which bypasses the cooling radiator (80), and to a third branch (86) of the circuit which contains a heater matrix (88) for heating the cabin.

## Patentansprüche

1. Steuerventil für einen Fluidkreislauf, umfassend ein Gehäuse (12), das mit einem Fluideinlauf (18) und mindestens zwei Fluidausläufen (20, 22, 24) versehen ist und das ein Drehlager für ein Regelorgan (26) begrenzt, das geeignet ist, sich um eine Drehachse (XX) zu drehen und verschiedene Winkelpositionen einzunehmen, um die Verteilung des Fluids durch die Ausläufe hindurch zu regeln, wobei das Gehäuse (12) eine Bodenwand (14) umfasst, in welche der Fluideinlauf einmündet, und eine Seitenwand (16), in welche die Fluidausläufe einmünden,
**dadurch gekennzeichnet, dass** das Regelorgan (26) von einem Dichtungsring (42) in Form eines offenen Rings umgeben ist, der sich zusammen mit dem Regelorgan (26) dreht und der mit einem geringen Spiel (j) um das Regelorgan herum angeordnet ist, was dem Dichtungsring erlaubt, von innen gegen die Seitenwand (16) gedrückt zu werden, um unter der Wirkung des Drucks (P) des Fluids eine Dichtigkeit zu gewährleisten.

2. Steuerventil nach Anspruch 1, **dadurch gekennzeichnet, dass** der Dichtungsring (42) aus einem Material mit geringem Reibungskoeffizienten besteht.

3. Steuerventil nach Anspruch 2, **dadurch gekennzeichnet, dass** das Material mit geringem Reibungskoeffizienten aus den Polyamiden und dem Polytetrafluorethylen gewählt wird.

4. Steuerventil nach einem der Ansprüche 1 bis 3, **dadurch gekennzeichnet, dass** der Dichtungsring (42) eine glatte Außenfläche umfasst, in welcher eine Vielzahl von Blindlöchern (62) einmünden, die regelmäßig verteilt sind, wodurch die Kontaktfläche zwischen dem Dichtungsring (42) und der Seitenwand (16) verringert werden kann.

5. Steuerventil nach Anspruch 4, **dadurch gekennzeichnet, dass** das Verhältnis (R) zwischen der Fläche (ST) der Blindlöcher (62) und der glatten Fläche (SL) des Dichtigkeitsrings (42) zwischen 25% und 40% liegt, bevorzugt etwa 33% beträgt.

6. Steuerventil nach einem der Ansprüche 4 und 5, **dadurch gekennzeichnet, dass** die Blindlöcher (62) einen kreisförmigen Umriss haben.

7. Steuerventil nach Anspruch 6, **dadurch gekennzeichnet, dass** die Blindlöcher (62) die Form von Kugelabschnitten haben.

8. Steuerventil nach einem der Ansprüche 1 bis 7, **dadurch gekennzeichnet, dass** das Regelorgan (26) und der Dichtigkeitsring (42) Reliefs (58, 60) mit eingreifender Form aufweisen, um ihre gemeinsame Drehung zu gestatten.

9. Steuerventil nach einem der Ansprüche 1 bis 8, **dadurch gekennzeichnet, dass** die Seitenwand (16) des Ventilgehäuses eine zylindrische Aufnahme begrenzt, und dadurch, dass der Dichtungsring (42) eine zylindrische Außenfläche aufweist.

10. Steuerventil nach einem der Ansprüche 1 bis 8, **dadurch gekennzeichnet, dass** der Fluideinlauf (18) axial in die Bodenwand (14) einmündet, und dadurch, dass die Fluidausläufe (20, 22, 24) radial in die Seitenwand (16) des Ventilgehäuses einmünden.

11. Fluidkreislauf, **dadurch gekennzeichnet, dass** er ein Steuerventil nach einem der Ansprüche 1 bis 10 umfasst, dessen Fluideinlauf (18) mit einer Fluidquelle (76) verbunden ist und dessen Fluidausläufe (20, 22, 24) jeweils mit Zweigen (78, 86, 84) des Kreislaufs verbunden sind.

12. Fluidkreislauf nach Anspruch 11, **dadurch gekennzeichnet, dass** er in Form eines Kühlkreislaufs (70) einer Wärmekraftmaschine (72) für ein Kraftfahrzeug ausgeführt ist, der unter der Wirkung einer Umwälzpumpe (74) von einer Kühlflüssigkeit durchströmt wird, und dadurch, dass das Steuerventil (10) ein Dreiwegeventil ist, dessen Fluideinlauf (18) mit einem vom Motor (72) kommenden Kühlflüssigkeitszulauf (76) verbunden ist, und dessen drei Fluidausläufe (20, 22, 24) jeweils verbunden sind mit einem ersten Zweig (78) des Kreislaufs, der einen Kühler (80) enthält, mit einem zweiten Zweig (84) des Kreislaufs, der eine Umgehung des Kühlers (80) darstellt, und mit einem dritten Zweig (86) des Kreislaufs, der einen Heizlüfter (88) zur Beheizung der Fahrgastelle enthält.
